# FASCICULE DE BREVET EUROPEEN

(11) **EP 0 454 652 B1**
(45) Date de publication et mention de la délivrance du brevet: **29.11.1995**
(21) Numéro de dépôt: 91870067.5
(22) Date de dépôt: 22.04.1991
(51) Int. Cl.: F24F 1/02, F24F 5/00

(54) **Appareil d'aération d'un local**
Gerät zur Belüftung eines Raumes
Apparatus for ventilating a room

(30) Priorité: 24.04.1990 FR 9005940
(43) Date de publication de la demande: 30.10.1991
(73) Titulaire: PELKO ELECTRIC S.A., Attikis (GR)
(72) Inventeur: Pelonis, Kosta L., Bradfort, Ontario, L3Z 2A5 (CA)
(74) Mandataire: Vanderperre, Robert

(56) Documents cités:
- DE-A- 1 604 194
- DE-C- 631 511
- GB-A- 2 122 336
- US-A- 2 460 335
- logoff

## Description

La présente invention a trait à un appareil d'aération mettant en oeuvre des moyens permettant de conditionner l'atmosphère d'un local de manière à l'amener à une pression, à un degrés d'humidité, à une température donnée, etc.

Un appareil d'aération de ce genre a déjà été décrit et représenté dans le brevet britannique n°2 122 336. Cet appareil, destiné à produire de l'air frais comprend un bloc de ventilation associé à un bloc de climatisation interposé entre ledit bloc de ventilation et ledit local. Le bloc de climatisation est composé d'au moins une cassette interchangeable destinée à produire de l'air frais et maintenue sur le bloc de ventilation au moyen d'un dispositif d'assemblage démontable. Cet appareil, qui adopte une configuration parallèlèpipèdique, possède un dispositif d'assemblage démontable de la cassette interchangeable formé par un couvercle articulé autorisant l'accès à l'intérieur d'un logement dans lequel est logée ladite cassette de refroidissement.

Un autre appareil d'aération de ce genre a été proposé dans le brevet allemand n°631511. Cet appareil allemand comprend un bloc de ventilation associé à un bloc de climatisation interposé entre ledit blocs de ventilation et ledit local, et une cassette interchangeable destinée à produire de la chaleur et maintenue près dudit bloc de climatisation au moyen d'un dispositif d'assemblage démontable. L'enveloppe de protection du bloc de climatisation et l'enveloppe de protection du bloc de ventilation sont façonnées dans deux cylindres complémentaires et ouverts à leur deux extrémités pour autoriser le logement de la cassette interchangeable de forme cylindrique pour le premier et celui du ventilateur de forme cylindrique pour le second. Le dispositif d'assemblage démontable de la cassette interchangeable est constitué par un simple rebord périphérique du cylindre supérieur permettant de retenir la cassette interchangeable, formée à cet effet d'un récipient pourvu à sa partie périphérique haute d'un épaulement reposant sur ledit rebord.

On comprend que le bloc de ventilation lequel est généralement constitué d'un ventilateur, produit, en sortie, un courant d'air pulsé qui sera dirigé à travers les éléments de la cassette interchangeable du bloc de climatisation placé devant le bloc de ventilation. Ainsi, pendant son passage dans le bloc de climatisation, ledit air pulsé subit l'action physique et /ou chimique des éléments constitutifs de la cassette dans le but d'une modification de ses propriétés tels que l'abaissement de son degré de température pour l'appareil britannique et l'élévation de son degré de température pour l'appareil allemand.

Le dispositif d'assemblage démontable de la cassette interchangeable de l'appareil d'aération britannique définit une simple trappe d'accès disposée au-dessus de l'appareil pour autoriser la pose et/ou la dépose de ladite cassette à l'intérieur de celui-ci. Le dispositif d'assemblage démontable de l'appareil d'aération allemand est, quant à lui, uniquement destiné à retenir ladite cassette au-dessous du bloc de ventilation.

Le but de la présente invention est de pouvoir utiliser des cassettes facilement interchangeables et qui, contrairement aux cassettes utilisées dans les appareils britannique et allemand sus-évoqués, puissent être alimentées en énergie électrique pour concourir principalement à la production de chaleur.

Selon l'invention définie dans la revendication 1, la susdite cassette interchangeable est maintenue sur le susdit bloc de ventilation au moyen d'un dispositif d'assemblage démontable constitué par des éléments mâles ou femelles portés par la susdite cassette qui coopèrent avec des éléments femelles ou mâles portés par le susdit bloc de ventilation pour établir la connexion électrique entre les deux dits blocs. On comprend que ces éléments mâles et femelles assurent un double rôle puisqu'ils permettent le maintien de la cassette sur le bloc de ventilation tout en assurant la continuité électrique entre les deux blocs. De cette façon, la désolidarisation de la cassette de son attache sur le bloc de ventilation entraîne ipso facto, la déconnexion électrique de cette dernière. Il n'est donc plus nécessaire d'effectuer des opérations de branchement et de débranchement de fils électriques rendant ainsi très aisées les manipulations de montage et/ou de démontage de la cassette, lesquelles manipulations sont souvent réalisées par des personnes utilisatrices néophytes dans ce type d'opérations.

Selon une forme préférentielle de réalisation de l'invention, le susdit bloc de ventilation est fixée sur un socle renfermant le dispositif électrique nécessaire au fonctionnement du bloc de ventilation et/ou du bloc de climatisation. Cette configuration a pour premier avantage de dissocier les parties mécaniques (bloc de ventilation et bloc de climatisation) des parties électriques contenues dans le socle. En outre, ce dernier servant de support audit bloc de ventilation permet d'envisager pour ce dernier toute configuration possible puisque sa stabilité est assurée par ledit socle. Dès lors, le bloc de ventilation, et ainsi que le bloc de climatisation qui est en correspondance, pourront adopter les lignes courbes d'une section circulaire au ovale. Bien entendu, ce socle n'empêche pas l'adoption de lignes rectilignes voire celles d'un losange, d'un rectangle pour la section desdits blocs.

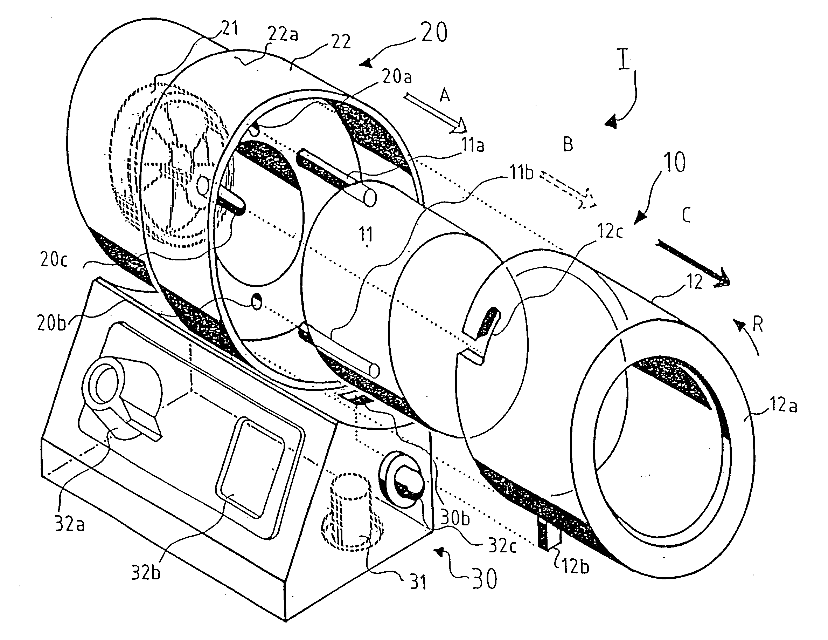

Les concepts fondamentaux de l'invention venant d'être exposés ci-dessus dans leur forme la plus élémentaire, d'autres caractéristiques et d'autres avantages apparaîtront plus clairement à la lecture de la description qui suit donnant, à titre d'exemple non limitatif et en regard du dessin annexé, un mode de réalisation d'un appareil d'aération mettant en oeuvre ces concepts fondamentaux.

La figure portée par ce dession est une vue en perspective éclatée d'un tel appareil.

Tel qu'on peut le voir, l'appareil de l'invention représenté de manière synoptique et référencé I dans son ensemble, est constitué :
- d'un bloc cylindrique de climatisation 10 destiné à modifier les propriétés physiques et/ou chimiques de l'air le traversant,
- d'un bloc cylindrique de ventilation 20 produisant en sortie un courant d'air pulsé symbolisé par la flèche blanche A,
- et d'un socle 30 sur lequel est fixé le bloc de ventilation 20 et renfermant l'ensemble du dispositif électrique nécessaire au bon fonctionnement des deux blocs 10 et 20.

Selon la disposition principale de l'invention, le bloc de climatisation 10 est composé d'une cassette interchangeable 11, constituée dans le cas présent, d'éléments semi-conducteurs à nids d'abeille s'élevant en température, sous l'effet d'un champ électrique appliqué sur leurs faces. Un ventilateur 21 du bloc de ventilation 20 produit en sortie un courant d'air pulsé (symbolisé par la flèche blanche A), qui, en traversant (flèche en pointillés B) les ouvertures des éléments semi-conducteurs chauffants de la cassette 11, s'élève en température par convection au contact desdits éléments, afin de diffuser en sortie du bloc de climatisation 10, un flux d'air chaud symbolisé par la flèche noire C, dans l'atmosphère du local dans lequel est disposé l'appareil d'aération de l'invention devenu appareil de chauffage. Comme utilement précisé au début du présent mémoire, la cassette chauffante 11 peut être remplacée par une cassette parfumante, aseptique, ionisante, etc.... De même, il suffit de déposer la cassete chauffante 11 pour que l'appareil I fonctionne en tant que ventilateur.

Le maintien de la cassette 11 sur le bloc de ventilation 20 est obtenu au moyen d'un dispositif d'assemblage démontable pour autoriser facilement la dépose et/ou la pose de ladite cassette 11. A cet effet, le dispositif d'assemblage est constitué par des éléments mâles formant des broches 11a et 11b (du type à banane) préformées en saillie de la cassette 11 et destinées à coopérer de manière élastique avec des éléments femelles ajustées formant des réservations 20a et 20b aménagées dans le bloc de ventilation 20. Ces réservations femelles 20a et 20b sont connectées aux deux pôles d'un circuit d'alimentation électrique de telle sorte que l'embranchement des broches 11a et 11b de la cassette 11 dans les réservations femelles 20a et 20b permet d'établir une liaison électrique sans fil du bloc de ventilation 20 au bloc de climatisation 10, nécessaire au fonctionnement de ce dernier. Ainsi, lorsque la cassette chauffante 11 est assemblée au bloc de ventilation 20, l'engagement des broches 11a et 11b dans les réservation femelles 20a et 20b, permet de mettre sous tension les deux broches 11a et 11b de la cassette 11 pour alimenter en énergie électrique, les éléments semi-conducteurs chauffants de cette dernière.

Avantageusement, la susdite cassette chauffante et interchangeable 11 est logée à l'intérieur d'une enveloppe de protection 12 ménagée d'une gorge 12c dans laquelle s'engage un ergot 20c en correspondance porté par le susdit bloc de ventilation 20. Ainsi, une fois l'ergot 20c engagé dans la gorge 12c, une rotation de ladite enveloppe de protection 12 dans le sens de la flèche R permet de maintenir bloquée ladite enveloppe sur ledit bloc. Une rotation inverse de celle de la flèche R permet de rendre amovible ladite enveloppe de protection 12. Outre son rôle premier d'écran vis-à-vis d'un contact direct fortuit avec la cassette chauffante 11, cette enveloppe de protection 12 offre de nombreux autres avantages.

D'une part, elle permet de s'adapter aux formes du bloc de ventilation 20 afin de définir une esthétique d'ensemble harmonieuse. Ainsi, dans le cas de l'appareil I illustré sur le dessin, l'enveloppe de protection 12 de la cassette 11 du bloc de climatisation 10 et l'enveloppe de protection 22 du ventilateur 21 du bloc de ventilation, pourront adopter chacune la forme d'une demie-coque cylindrique ouverte à ses deux extrémités. Un rebord, 12a pour celle du bloc 10 et 22a pour celle du bloc 20, peut être prévu pour assurer la retenue des accessoires tels que la grille de protection pour le bloc de climatisation 10 et le filtre a poussières pour le bloc de ventilation 20.

D'autre part, la susdite enveloppe de protection 12 de la cassette chauffante 11 peut être munie d'une broche 12b débouchant au travers d'une fente 30b ménagée dans le susdit socle 30, au contact du dispositif d'alimentation électrique installé à l'intérieur, de telle sorte que la rotation R de la susdite enveloppe de protection 12 permette de fermer le circuit électrique par l'intermédiaire de ladite broche 12b. Cette dernière fonctionne alors comme un interrupteur de sécurité qui conditionne la mise en alimentation électrique de la cassette 11 assemblée au bloc de ventilation 10, à la mise en place de l'enveloppe 12 et au blocage de sa gorge 12c dans l'ergot 20c par une rotation de ladite enveloppe dans le sens de la flèche R.

Selon une caractéristique particulièrement avantageuse de l'invention, la base du susdit socle est équipée d'un bouton-poussoir 31 destiné à interrompre ou à rétablir le courant du susdit circuit d'alimentation électrique logé dans le socle 30. Ainsi, lorsque la base du socle 30 ne repose plus sur sa surface d'appui, la force de rappel du ressort du bouton 31 permmet d'interrompre le passage du courant électrique mettant alors, hors service l'appareil I. Il suffit de reposer ce dernier sur sa surface d'appui pour rétablir le passage du courant. Ce deuxième interrupteur constitue une autre sécurité en cas notamment de renversement de l'appareil I.

Sur la face latérale du socle 31 sont agencés les organes classiques (thermostat 32a, interrupteur 32b, voyant 32c, etc...) nécessaires au fonctionnement et au contrôle de l'ensemble de l'appareil d'aération I.

Afin de permettre une meilleure compréhension des dessins, une liste des références avec leurs légendes est ci-après énumérée.
- I: Appareil d'aération,
- 10: Bloc de climatisation,
- 11: Cassette chauffante interchangeable,
- 11a,11b: Broches mâles d'assemblage de la cassette 11,
- 12: Enveloppe de protection du bloc 10,
- 12a: Rebord d'arrêt de l'enveloppe 12,
- 12b: Broche d'interrupteur,
- 12c: Gorge de blocage sur l'enveloppe 12,
- 20: Bloc de ventilation,
- 20a,20b: Réservations femelles d'assemblage du bloc 20,
- 20c: Ergot de blocage sur l'enveloppe 22,
- 21: Ventilateur,
- 22: Enveloppe de protection du bloc 20,
- 22a: Rebord d'arrêt de l'enveloppe 22,
- 30: Socle-support,
- 30c: Fente d'accès de la broche 12b,
- 31: Bouton-poussoir,
- 32a,32b, 32c: Organes de contrôle électrique,
- Flèche A: Courant d'air frais,
- Flèche B: Courant d'air chauffé,
- Flèche C: Courant d'air chaud,
- Flèche R: Mouvement de rotation de l'enveloppe 12.

## Revendications

1. Appareil d'aération d'un local comprenant un bloc de ventilation (20) associé à un bloc de climatisation (10) interposé entre ledit bloc de ventilation (20) et ledit local, et composé d'au moins une cassette interchangeable (11) qui, permettant de modifier les propriétés physiques et/ou chimiques du flux d'air (flèche B) la traversant, est maintenue sur le susdit bloc de ventilation (20) au moyen d'un dispositif d'assemblage démontable (11a, 11b, et 20a, 20b), l'enveloppe de protection (12) du susdit bloc de climatisation (10) et l'enveloppe de protection (22) du susdit bloc de ventilation (20) étant façonnées dans deux cylindres complémentaires et ouverts à leurs deux extrémités pour autoriser le logement de la cassette interchangeable (11) de forme cylindrique pour le premier et celui du ventilateur (21) de forme cylindrique pour le second, **CARACTERISE PAR LE FAIT QUE** le susdit dispositif d'assemblage est constitué par des éléments mâles (11a et 11b) ou femelles portés par la susdite cassette (11) qui coopèrent avec des éléments femelles (20a et 20b) ou mâles portés par le susdit bloc de ventilation (20) pour établir la connexion électrique du bloc de ventilation (20) au bloc de climatisation (10).

2. Appareil d'aération selon la revendication 1, **CARACTERISE PAR LE FAIT QUE** la susdite cassette interchangeable (11) est formée d'éléments concourant à la production de chaleur de telle sorte que ledit appareil réchauffe l'atmosphère du susdit local en diffusant en sortie un flux d'air chaud (flèche C) dans ce dernier.

3. Appareil d'aération selon la revendication 1 ou 2, **CARACTERISE PAR LE FAIT QUE** le susdit bloc de ventilation (20) est fixé sur un socle (30) renfermant le dispositif électrique nécessaire au fonctionnement du bloc de ventilation (20) et/ou du bloc de climatisation (10).

4. Appareil d'aération selon l'une quelconque des revendications 1 à 3, **CARACTERISE PAR LE FAIT QUE** la susdite enveloppe de protection (12) dans laquelle est logée la susdite cassette interchangeable (11) est ménagée d'une gorge (12c) au moins dans laquelle est engagé un ergot (20c) en correspondance porté par l'enveloppe de protection (22) du susdit bloc de ventilation (20) et bloqué dans ladite gorge (12c) par une rotation (flèche R) de ladite enveloppe de protection (12) de telle sorte que par une rotation inverse, ladite enveloppe de protection (12) soit rendue amovible.

5. Appareil d'aération selon l'une quelconque des revendications , 3 et 4 **CARACTERISE PAR LE FAIT QUE** la susdite enveloppe de protection (12) de la cassette (11) est munie d'une broche (12b) débouchant, au travers d'une fente (30c) ménagée dans le susdit socle (30), au contact d'un circuit d'alimentation électrique agencé dans le susdit socle (30), de telle sorte que la rotation (flèche R) de la susdite enveloppe de protection (12) permet d'ouvrir ou de fermer ledit circuit par l'intermédiaire de ladite broche (12b).

6. Appareil d'aération selon selon l'une quelconque des revendications 3 à 5, **CARACTERISE PAR LE FAIT QUE** la base du susdit socle (30) est équipée d'un bouton-poussoir (31) destiné à interrompre ou à rétablir le passage du courant du susdit circuit d'alimentation électrique logé à l'intérieur dudit socle.

7. Appareil d'aération selon l'une quelconque des revendications 3 à 6 **CARACTERISE PAR LE FAIT QUE** les organes apparents (32a, 32b, 32c) nécessaires au fonctionnement et au contrôle électriques de l'ensemble de l'appareil sont disposés sur la face latérale inclinée du susdit socle (30).

## Claims

1. A device for the aeration of premises including a ventilation unit (20) associated with an air-conditioning unit (10) set between said ventilation unit (20) and said premises, and comprising at least one interchangeable cassette (11) which, allowing modification of the physical and/or chemical properties of the air flow crossing it (arrow B), is kept in place on the above-mentioned ventilation unit (20) by means of an assembly device which can be dismantled (11a, 11b, and 20a, 20b), the protecting envelope (12) of the above-mentioned air-conditioning unit (10) and the protecting envelope (22) of the above-mentioned ventilation unit (20) being shaped in two complementary cylinders and open at their two ends to allow the placing of the interchangeable cassette (11) of cylindrical shape for the former and the placing of the ventilator (21) of cylindrical shape for the second, characterized in that the above-mentioned assembly device comprises male (11a and 11b) or female elements carried by the above-mentioned cassette (11) which act together with the female (20a and 20b) or male elements carried by the above-mentioned ventilation unit (20) in order to establish the electrical connection between the ventilation unit (20) and the air-conditioning unit (10).

2. An aeration device according to claim 1 characterized in that the above-mentioned interchangeable cassette (11) is formed of elements contributing to the production of heat in such a way that said apparatus heats the atmosphere of the above-mentioned premises by diffusing out a flow of hot air (arrow C) therein.

3. An aeration device according to claim 1 or 2, characterized in that the above-mentioned ventilation unit (20) is fixed on a plinth (30) enclosing the electrical device necessary for the operation of the ventilation unit (20) and/or the air-conditioning unit (10).

4. An aeration device according to any one of claims 1 to 3, characterized in that the above-mentioned protection envelope (12) in which is lodged the above-mentioned interchangeable cassette (11) is provided with at least one neck (12c) in which is engaged a connecting spigot (20c) carried by the protection envelope (22) of the above-mentioned ventilation unit (20) and fixed in said neck (12c) by rotation (arrow R) of the above-mentioned protection envelope (12) in such a way that by inverse rotation, said protection envelope is rendered detachable.

5. An aeration device according to any one of claims 3 or 4 characterized in that the above-mentioned protection envelope (12) of the cassette (11) is provided with a spindle (12b) which, passing through a slit (30c) made in the above-mentioned plinth (30), makes contact with an electrical supply circuit fitted in the above-mentioned plinth (30), in such a way that the rotation (arrow R) of the above-mentioned protection envelope (12) makes it possible to open or close said circuit through the intermediary of said spindle (12b).

6. An aeration device according to any one of claims 3 to 5, characterized in that the base of the above-mentioned plinth (30) is equipped with a press-button (31) designed to interrupt or re-establish the passage of the current in the above-mentioned electrical supply circuit fitted inside said plinth.

7. An aeration device according to any one of claims 3 to 6, characterized in that the apparent elements (32a, 32b, 32c) essential for the electrical operation and control of the ensemble of the device are arranged on the lateral inclined face or the above-mentioned plinth (30).

## Patentansprüche

1. Das Lüftungsgerät eines Raumes, das einen Lüfterblock (20) umfaßt, der an einen Klimatisierungsblock (10) angeschlossen ist, der wiederum zwischen dem Lüfterblock (20) und dem besagten Raum angeordnet ist, und mindestens eine Austauschkassette (11) beinhaltet, die aufgrund der Tatsache, daß durch sie die physischen und/oder chemischen Eigenschaften des Luftstromes (Pfeil B), dar durch sie hindurchgeht, verändert werden können, auf dem besagten Lüfterblock (20) über eine ausbaubare Anschlußvorrichtung (11a, 11b, und 20a, 20b) auf dem besagten Klimatisierungsblock (10) und dem Schutzgehäuse (12) des besagten Klimatisierungsblocks (10) und des besagten Lüfterblocks (20) gehalten wird, die in zwei zusätzlichen Zylindern gearbeitet sind, die für das Einlegen der Austauschkassette (11) an ihren beiden Seiten geöffnet sind, wobei ersterer und der des Lüfters (21) und zweiterer zylindrisch sind, GEKENNZEICHNET DADURCH, DASS die besagte Anschlußvorrichtung aus Steckteilen (11a und 11b) oder Einsteckteilen (20 a und 20b) bestehen, die auf der besagten Kassette (11) angeordnet sind und mit den Steckteilen (20a und 20b) oder Einsteckteilen, die auf dein Lüfterblock (20) angebracht sind, kooperieren, um die elektrische Verbindung des Lüfterblocks (20) mit dem Klimatisierungsblock (10) herzustellen.

2. Lüftungsgerät gemäß dem Patentanspurch 1, GEKENNZEICHNET DADURCH, DASS die besagte Austauschkassette (11), die aus Komponenten besteht, die zusammenwirkend Wärme erzeugen, so daß das besagte Gerät durch Austreten eines Warmluftstroms am Ausgang in den Raum (Pfeil C) die Luft das besagten Raums erwärmt.

3. Lüftungsgerät gemäß Patentanspruch 1 oder 2, GEKENNZEICHNET DADURCH, DASS der oben genannte Lüfterblock (20) auf einem Sockel (30) befestigt ist, in dem die elektrische Vorrichtung eingebaut ist, die für den Betrieb des Lüfterblocks (20) und/oder des Klimatisierungsblock (10) notwendig ist.

4. Lüftungsgerät gemäß einem der Patentansprüche 1 bis 3, GEKENNZEICHNET DADURCH, DASS das oben genannte Schutzgehäuse (12), in dem die besagte Austauschkassette (11) angeordnet ist, mit mindestens einer Vertiefung ausgestattet ist, in der ein entsprechender Stift (20c) eingesetzt wird, der auf dem Schutzgehäuse (22) des besagten Lüfterblocks (20) angeordnet ist und in besagter Vertiefung durch eine Drehung (Pfeil R) des besagten Schutzgehäuses (12) arretiert wird, so daß bei einer Drehung in entgegengesetzter Richtung die besagte Schutzgehäuse (12) abgenommen werden kann.

5. Lüftungsgerät gemäß einem der Patenansprüche 3 und 4 , GEKENNZEICHNET DADURCH, DASS das besagte Schutzgehäuse (12) der Kassette (11) mit einer Spindel (12b) ausgestattet ist, die über eine in besagten Sockel (30) ausgeführte Öffnung (30c) in einen Kontakt einer Stromschaltung mündet, die in besagten Sockel eingebaut ist, so daß die Drehung (Pfeil R) des besagten Schutzgehäuses (12) das Öffnen oder Schließen der Schaltung über die besagte Spindel (12b) möglich ist.

6. Lüftungsgerät gemäß einem der Patenansprüche von 3 bis 5, GEKENNZEICHNET DADURCH, DASS die Basis des besagten Sockels (30) mit einer Drucktaste (31) für die Unterbrechung oder das Wiedereinschalten des Stroms der besagten Stromschaltung, die in besagten Sockel eingebaut ist, ausgestattet ist.

7. Lüftungsgerät gemäß einem der Patenansprüche von 3 bis 6, GEKENNZEICHNET DADURCH, DASS die sichtbaren Komponenten (32a, 32b, 32c), die für den Betrieb und die elektrische Überwachung aller Geräte erforderlich sind, auf der geneigten Seitenfläche des besagten Sockels (30) angeordnet sind.
